# EUROPEAN PATENT APPLICATION

(11) **EP 4 610 015 A1**
(43) Date of publication of application: **03.09.2025**
(21) Application number: 22963571.9
(22) Date of filing: 27.10.2022
(51) Int. Cl.: B29C 44/42, B29C 44/02, B29C 44/58, B29C 45/14, B29C 45/26, B29C 45/40, B29C 45/24

(54) **COMBINED-TYPE FOAM INJECTION MOLDED PRODUCT AND MANUFACTURING METHOD THEREFORE**

(71) Applicant: Comtech Chemical Co., Ltd., Gimhae-si, Gyeongsangnam-do 50827 (KR)
(72) Inventor: LIM, Byoungmun, Gimhae-si, Gyeongsangnam-do 50827 (KR); LIM, Daehwi, Gimhae-si, Gyeongsangnam-do 50827 (KR); CHOI, In Cheol, Gimhae-si, Gyeongsangnam-do 50827 (KR); KWON, Min Ji, Gimhae-si, Gyeongsangnam-do 50827 (KR)
(74) Representative: Wilson Gunn
(86) International application number: PCT/KR2022/016556
(87) International publication number: WO 2024/090610

(57) **Abstract**

A composite foamed injection-molded article and a method for manufacturing the same are provided. The manufacturing method for the composite foamed injection-molded article includes steps of: i) providing a reinforcement member manufactured through 3D printing; ii) providing the reinforcement member to at least one mold part selected from the group consisting of an upper mold part and a lower mold part; iii) forming a hollow space by coupling the upper mold part and the lower mold part; iv) providing a mixture in which a molten product is mixed with a foaming agent; v) injecting the mixture into the hollow space; vi) providing a combined-type foam injection molded product including the reinforcement member and a foam resin obtained by foaming the mixture in the hollow space; and vii) separating the upper mold part and the lower mold part so as to withdraw the composite foamed injection-molded article.

## Description

### Technical Field

The present invention relates to a composite foamed injection-molded article and a method for manufacturing the same. More specifically, the present invention relates to a foamed injection-molded article incorporating a three-dimensional structure and a method for manufacturing the same.

### Background

In a foaming injection process, a molten resin mixed with a foaming agent is injected into a mold and foamed to produce a desired product in accordance with the shape of the mold. This process is widely used for manufacturing low-density products with a consistent volume.

However, since the foaming injection process does not involve a compression process, an intermolecular bonding strength of the polymer is relatively low, resulting in inferior mechanical performance compared to expanded foam molded products. Therefore, it presents a drawback in that it is not suitable for molded products that require a certain level of strength.

### Detailed Description of the Invention

### Technical Problem

A foamed injection-molded article incorporating a three-dimensional structure is provided. Also, a method for manufacturing the aforementioned foamed injection-molded article is provided.

### Technical Solution

A method for manufacturing a composite foamed injection-molded article according to an embodiment of the present invention includes i) providing a reinforcing member manufactured by 3D printing; ii) providing the reinforcing member to at least one mold part selected from a group consisting of an upper mold part and a lower mold part; iii) forming a cavity by combining the upper mold part and the lower mold part; iv) providing a mixture in which a foaming agent is blended into a molten material; v) injecting the mixture into the cavity; vi) forming a composite foamed injection-molded article including the reinforcing member and a foamed resin foamed in the cavity; and v) separating the upper mold part and the lower mold part to remove the composite foamed injection-molded article.

In the providing the reinforcing member, a plurality of through-holes may be formed on at least one sides of the reinforcing member. In the providing the composite foamed injection-molded article, the foamed resin may be filled in one or more of the through-holes to physically bind with the reinforcing member. The one or more sides of the reinforcing member may include a plurality of sides. The plurality of sides may include i) a first side, and ii) a second side spaced apart from and opposing to the first side. The plurality of sides may further include a third side connecting the first and second sides, and the third side may include one or more step portions or notch portions. The first and second sides may be in contact with a bottom of the lower mold part, and the third side may be spaced apart from the bottom of the lower mold part.

In the providing the reinforcing member, the reinforcing member may further include i) a first support portion connecting the first and second sides, and ii) a second support portion connecting the first support portion and the third side. The second support portion may be fixed on a convex linear part formed in the mold part. The second support portion may include i) a first inclined support portion directed in a first direction, and ii) a second inclined support portion connected to and in line contact with the first inclined support portion and directed in a second direction opposite to the first direction. The first support portion may include i) a curved portion connected to the second support portion, and ii) a straight portion connecting the curved portion and at least one of the first and second sides. The curved portion may be convexly formed toward the opening direction of the mold part during foaming of the foamed resin.

In the providing the reinforcing member, the reinforcing member may include a protruding portion protruding toward the opening direction of the mold part. The protruding portion may be formed on the side and bonded to the foamed resin. In the providing the reinforcing member, the at least one sides may be adjacent to the plurality of through-holes and may further include a reinforcing portion that comes into contact with an inner surface of the first mold to form a closed space.

**The** method for manufacturing a composite foamed injection-molded article according to an embodiment of the present invention may further include i) introducing gas into the cavity to pressurize the cavity; and ii) exhausting the gas from the cavity. **The** exhausting of the gas may be performed before the injecting the mixture into the cavity. **The** injecting the mixture into the cavity may be performed simultaneously with the exhausting of the gas. Decrease amount in the injection pressure of the mixture over time during the injecting the mixture may be substantially the same as amount of the gas exhausted over time during the exhausting the gas. **In** the injecting the mixture, an intake/exhaust path surrounding the cavity may be formed on the lower mold part. A length of the cavity in the longitudinal direction may be greater than a length in the transverse direction perpendicular to the longitudinal direction. A plurality of intake/exhaust ports may be formed at both ends of the cavity in the longitudinal direction. The plurality of intake/exhaust ports may be in communication with the cavity.

The plurality of intake/exhaust ports may include i) a plurality of first intake/exhaust ports spaced apart from each other and located at a first end of the cavity; and ii) a plurality of second intake/exhaust ports spaced apart from each other and located at a second end opposite the first end. In the injecting the mixture, the average thickness of the composite foamed injection-molded article formed in a portion of the cavity closer to the second end may be greater than the average thickness of another portion of the cavity relatively closer to the first end. **The** exhaust pressure applied to the second intake/exhaust ports may be greater than the exhaust pressure applied to the first intake/exhaust ports.

The plurality of intake/exhaust ports may include i) a plurality of first intake/exhaust ports spaced apart from each other and located at a first end of the cavity; and ii) a plurality of second intake/exhaust ports spaced apart from each other and located at a second end opposite the first end. In the injecting the mixture, the average thickness of the composite foamed injection-molded article formed in a portion of the cavity closer to the second end may be greater than the average thickness of another portion of the cavity relatively closer to the first end. An amount of gas exhausted through the second intake/exhaust ports may be greater than an amount of gas exhausted through the first intake/exhaust ports.

In the exhausting the gas, the gas is exhausted through a first valve and a second valve connected to the intake/exhaust path corresponding to the longitudinal length of the cavity, and the second valve may be opened after the first valve is opened. The second valve may be opened 0.5 to 1 second after the first valve is opened. An opening degree of the first valve may be smaller than an opening degree of the second valve, and the opening degree of the first valve may be in a range of 20% to 40%. The opening degree of the second valve may be in a range of 50% to 70%.

In the injecting the mixture, the intake/exhaust ports surrounding the cavity may be formed on the lower mold part. A plurality of the intake/exhaust ports may be formed on both sides along the longitudinal direction of the cavity, and the intake/exhaust ports may be in communication with the intake/exhaust path. The plurality of the intake/exhaust ports may include i) a plurality of first intake/exhaust ports spaced apart from each other at a first side among both sides; and ii) a plurality of second intake/exhaust ports spaced apart from each other at a second side opposite the first side. The average thickness of the foamed article formed in a region closer to the second side may be greater than the thickness formed closer to the first side, and the diameter of one or more of the second discharge holes may be greater than that of one or more of the first discharge holes. In the providing the reinforcing member, the reinforcing member may include a plurality of sides, and one or more of the second discharge holes are located overlapping one or more of the sides.

A composite foamed injection-molded article according to an embodiment of the present invention includes i) a reinforcing member manufactured by 3D printing and having a plurality of sides; and ii) a foamed resin physically bonded to the reinforcing member. The foamed resin fills a plurality of through-holes formed on one or more of the plurality of sides.

The plurality of sides may include i) a first side, and ii) a second side spaced apart from and opposing to the first side. The foamed resin may be filled between the first and second sides. The plurality of sides may further include a third side connecting the first and second sides, and the third side includes one or more step portions or notch portions. The reinforcing member may further include i) a first support portion connecting the first and second sides; and ii) a second support portion connecting the first support portion and the third side. The second support portion may include i) a first inclined support portion directed in a first direction, and ii) a second inclined support portion connected in line contact with the first inclined support portion and directed in a second direction away from the first direction. The first support portion may include i) a curved portion connected to the second support portion; and ii) a straight portion connecting the curved portion and one or more of the first and second sides. Te curved portion may be convexly toward the opening direction of a mold part during the foaming of the foamed resin.

The reinforcing member may further include a protrusion projecting toward the opening direction of a mold applied to contact the one or more sides. The protrusion may be formed on the side and bonded to the foamed resin. The one or more sides may be adjacent to the plurality of through-holes, and may further include a reinforcing part configured to form a closed space with the mold that is applied to contact the side during foamed injection.

The strength of the reinforcing member may be greater than the strength of the foamed resin. The foamed resin may be made of one or more materials selected from the group consisting of polyether block amide (PEBA), thermoplastic polyester elastomer (TPEE), and thermoplastic polyurethane (TPU). The reinforcing member may be made of one or more materials selected from the group consisting of terephthalic acid (TPA) and polyamide-nylon 11 (PA11). The composite foamed injection-molded article may be a shoe sole.

### Effect of Invention

A composite foamed injection-molded article having low density yet high strength can be manufactured. Therefore, it can be applied to products requiring such characteristics, such as shoe soles. In addition, it is possible to produce high value-added products that integrally realize various effects such as shock absorption, stable support, and comfortable wearability.

### Brief description of the drawings

FIG. 1 is a schematic perspective view of a composite foamed injection-molded article according to an embodiment of the present invention.
FIG. 2 is a schematic perspective view of a reinforcing member included in the composite foamed injection-molded article of FIG. 1.
FIGs. 3 and 4 are schematic perspective views of another reinforcing member of the composite foamed injection-molded article of FIG. 1.
FIG. 5 is a schematic flowchart illustrating a method for manufacturing a composite foamed injection-molded article according to an embodiment of the present invention.
FIG. 6 is a schematic partial side view of a mold used in the manufacturing of the composite foamed injection-molded article shown in FIG. 1.

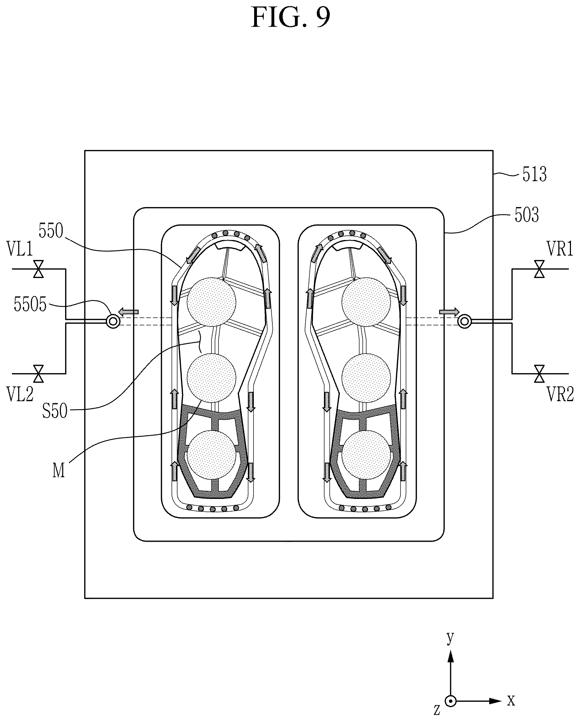

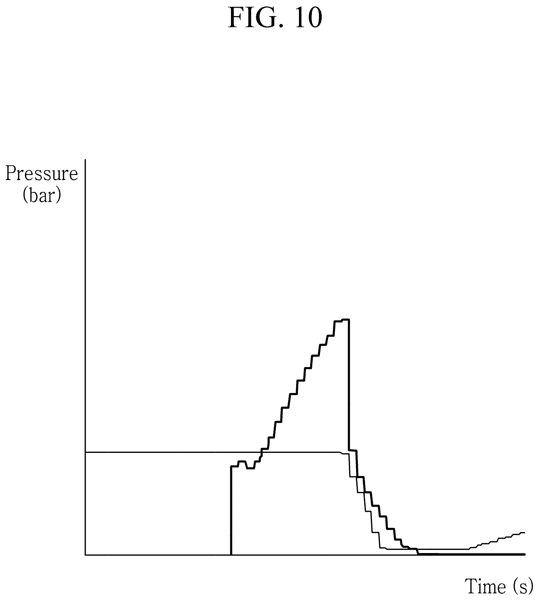

FIGs. 7 to 10 are schematic diagrams sequentially illustrating the foaming injection process using the mold of FIG. 6, respectively.
FIG. 11 is a graph showing changes in the pressure of the cavity and the injection pressure over time during the foaming injection process of FIGs. 7 to 10.
FIG. 12 is a schematic partial plan view of another mold used in the manufacturing of the composite foamed injection-molded article of FIG. 1.

### Best form for practicing the invention

The technical terms used herein are intended only to describe particular embodiments and are not meant to limit the scope of the present invention. Singular forms used herein shall also be understood to include plural forms unless the context clearly indicates otherwise. The term "comprising" as used in the specification specifies the presence of stated features, regions, integers, steps, operations, elements, and/or components, but does not preclude the presence or addition of one or more other features, regions, integers, steps, operations, elements, components, and/or groups thereof.

Unless otherwise defined, all technical and scientific terms used herein have the same meaning as commonly understood by one of ordinary skill in the art to which the present invention pertains. Terms defined in commonly used dictionaries should be interpreted as having meanings consistent with their use in the relevant technical literature and the present disclosure, and should not be interpreted in an idealized or overly formal sense unless expressly so defined.

As used herein, the term "composite foamed injection-molded article" refers to a molded part having a plurality of internal pores formed by a foaming process. The term "foaming" shall be interpreted to include both physical foaming and chemical foaming.

Hereinafter, exemplary embodiments of the present invention will be described in detail with reference to the accompanying drawings so that those skilled in the art can easily carry out the invention. However, the present invention may be embodied in various different forms and is not limited to the embodiments described herein.

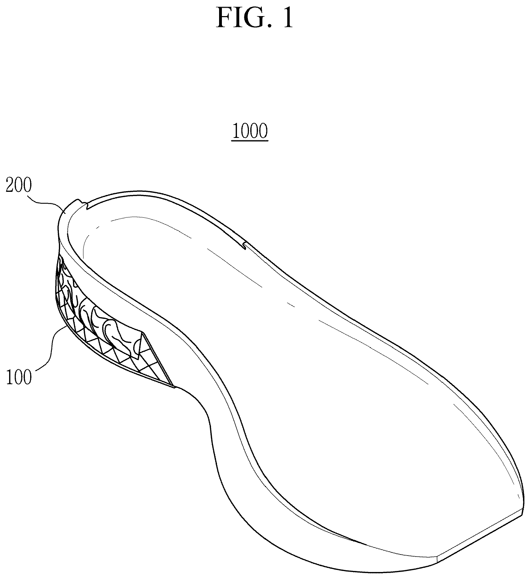

FIG. 1 schematically illustrates a foamed injection-molded article 1000 according to an embodiment of the present invention. The foamed injection-molded article 1000 shown in FIG. 1 is provided merely for illustrative purposes, and the present invention is not limited thereto. Accordingly, the foamed injection-molded article 1000 may be modified into various other forms.

The foamed injection-molded article 1000 includes a reinforcing member 100 and a foamed resin 200. In addition, the foamed injection-molded article 1000 may further include other components. The reinforcing member 100 is manufactured using 3D printing. Therefore, the reinforcing member 100 can be fabricated with a complex structure. Furthermore, the reinforcing member 100 is 3D printed from a material having higher strength than the foamed resin 200, which inherently has low mechanical strength due to high foaming. For example, the reinforcing member 100 may be made of terephthalic acid (TPA) or polyamide-nylon 11 (PA11). Since the rest of the detailed 3D printing process is easily understood by those skilled in the art, a detailed description thereof will be omitted. The foamed resin 200 may be made of one or more materials selected from polyether block amide (PEBA), thermoplastic polyester elastomer (TPEE), or thermoplastic polyurethane (TPU).

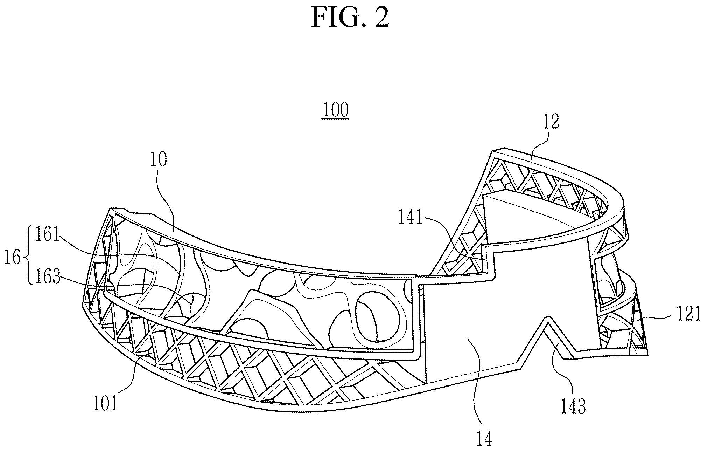

That is, as illustrated in FIG. 1, the foamed injection-molded article 1000 may be a shoe sole. Among the components of a shoe, the sole, particularly the heel portion, bears a significant load from the user. Therefore, although one method of addressing this is to form the foamed resin portion at the heel with increased thickness compared to other areas, the mechanical strength of the foamed injection-molded article 1000 can be enhanced by applying the reinforcing member 100 at the heel region. Hereinafter, the structure of the reinforcing member 100 will be described in more detail with reference to FIG. 2.

FIG. 2 schematically illustrates a reinforcing member 100 included in the composite foam injection molded article 1000 of FIG. 1. The structure of the reinforcing member 100 in FIG. 2 is merely exemplary of the present invention and is not intended to limit the invention. Therefore, the structure of the reinforcing member 100 may be modified into other forms.

As shown in FIG. 2, the reinforcing member 100 includes a plurality of sides 10, 12, 14. The plurality of sides 10, 12, 14 includes a first side 10, a second side 12, and a third side 14. The first side 10 and the second side 12 are spaced apart from and face each other. Since a space is formed between the first side 10 and the second side 12, a foam resin 200 is filled in this space and physically bonded with the reinforcing member 100.

Through-holes 101 are formed in the first side 10. FIG. 2 illustrates the through-holes 101 formed in a lattice pattern. The space between the first side 10 and the second side 12 is filled with foam resin 200, and the through-holes 101 are also filled with the foam resin 200. As a result, the foam resin 200 is anchored through the through-holes 101, and thus firmly bonded to the reinforcing member 100.

A reinforcement portion 106 includes a randomly formed frame portion 161. The plurality of sides 10, 12, 14 are applied to come into contact with a mold. Accordingly, the plurality of sides 10, 12, 14 comes into contact with the mold to form a closed space 163 with the mold. The closed space 163 is formed between the frame portions 161. As a result, the reinforcing member 100 can secure a certain level of strength through the reinforcement portion 106 while also securing elasticity through the closed space 163.

As shown in FIG. 2, the third side 14 connects the first side 10 and the second side 12. The third side 14 includes a stepped portion 141 and a notched portion 143. The stepped portion 141 and the notched portion 143 increase the contact area with the foam resin 200 and have a complex shape, thereby enhancing the physical bonding force with the foam resin 200. Accordingly, the reinforcing member 100 and the foam resin 200 can be firmly bonded to each other.

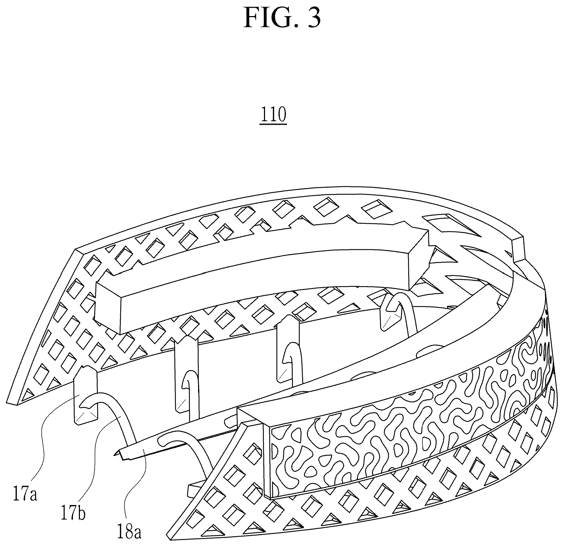

FIG. 3 is a schematic view of another reinforcing member 110 of FIG. 1. The structure of the reinforcing member 110 in FIG. 3 is merely illustrative of the present invention and is not intended to limit the scope of the invention. Accordingly, the structure of the reinforcing member 110 may be modified into other forms. In addition, since the reinforcing member 110 in FIG. 3 is similar to the reinforcing member 100 in FIG. 2, like reference numerals refer to like elements and detailed description thereof is omitted.

As shown in FIG. 3, the reinforcing member 110 has a shape similar to that of the reinforcing member 100 in FIG. 2. That is, the side structure of the reinforcing member 110 is similar to that of the reinforcing member 100 in FIG. 2. To maintain its rigidity while connecting the sides and to more firmly secure the mechanical bonding with the foamed resin, supports 17a, 17b and 18 are provided. These supports 17a, 17b and 18 are formed in a rib-like shape to firmly support the reinforcing member 110. The supports 17a and 17b include a straight portion 17a and a curved portion 17b. The curved portion 17b is connected to the support 18. The curved portion 17b is formed convexly toward the opening direction of the mold during foamed resin injection, to ensure strong bonding with the foamed resin. The straight portion 17a connects the curved portion 17b to the side, and has a larger diameter than the curved portion 17b. Therefore, the straight portion 17a can stably support the curved portion 17b.

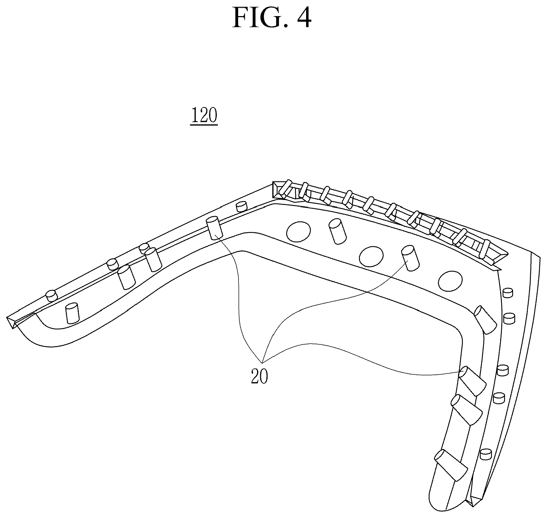

FIG. 4 is a schematic view of another reinforcing member 120 of the foamed injection-molded article 1000 shown in FIG. 1. The structure of the reinforcing member 120 in FIG. 4 is provided merely to illustrate the present invention and is not intended to limit the scope thereof. Accordingly, the structure of the reinforcing member 120 may be modified into various other forms. In addition, since the reinforcing member 120 in FIG. 4 is similar to the reinforcing member 100 in FIG. 2, like reference numerals refer to like elements, and detailed descriptions thereof are omitted.

As illustrated in FIG. 4, the reinforcing member 120 includes a plurality of protrusions 20 of various shapes spaced apart from each other. The plurality of protrusions 20 are formed on the side and protrude in the opening direction of the mold part. Accordingly, the plurality of protrusions 20 are bonded to the foamed resin, thereby improving the bonding strength between the reinforcing member 120 and the foamed resin.

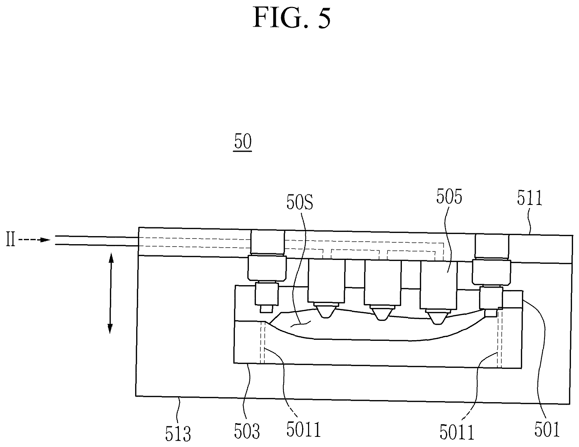

FIG. 5 schematically illustrates a partial side structure of a mold 50 used for manufacturing the composite foamed injection-molded article 1000 of FIG. 1. The structure of the mold 50 shown in FIG. 5 is merely illustrative of the present invention and is not intended to limit the scope of the invention. Accordingly, the structure of the mold 50 may be modified into other forms.

As shown in FIG. 5, the mold 50 includes an upper mold part 501 and a lower mold part 503. The lower mold part 503 is fixed to a support 513, and the upper mold part 501 moves vertically along the z-axis via a runner part 511.

To efficiently foam the mixture, the mold 50 is preheated to a temperature in the range of 10°C to 80°C. If the heating temperature is too low, foaming of the mixture becomes undesirable. If the heating temperature is too high, the mixture may overheat and the lead time may be extended. Therefore, the heating temperature of the mold 50 is maintained within the above range. Meanwhile, the surface of the foam or the thickness of the skin layer may be adjusted by setting the mold 50 to a temperature below or equal to room temperature.

An injection unit 505 is coupled to the upper mold part 501. Through the injection unit 505, the mixture is injected into the cavity S50 and foamed. The injection unit 505 is arranged along the y-axis, i.e., the longitudinal direction of the cavity S50. Since the low-density member is formed in an elongated shape along the y-axis, arranging three injection units 505 in the y-axis direction allows for rapid manufacturing of the low-density member.

The upper mold part 501 and the lower mold part 503 form a cavity S50 capable of producing a pair of shoe soles via foamed injection molding. The mixture is injected through the injection unit 505 arranged along the y-axis direction, and gas is supplied or discharged through the intake/exhaust path 5011. The mold 50 may operate using a hydraulic system, an electric system, or a hybrid hydraulic/electric system. The reinforcing member 100 as shown in FIG. 2 may be provided on either the upper mold part 501 or the lower mold part 503. That is, the reinforcing member 100 is positioned in the cavity S50 formed between the upper and lower mold parts 501 and 503. The reinforcing member 100 may be fitted into and located on the upper mold part 501. Alternatively, the reinforcing member 100 may be placed on the lower mold part 503. In another configuration, the reinforcing member 100 may be placed on both the upper and lower mold parts 501 and 503. That is, reinforcing members separately formed to be coupled vertically may be placed in the upper and lower mold parts, respectively and then joined together.

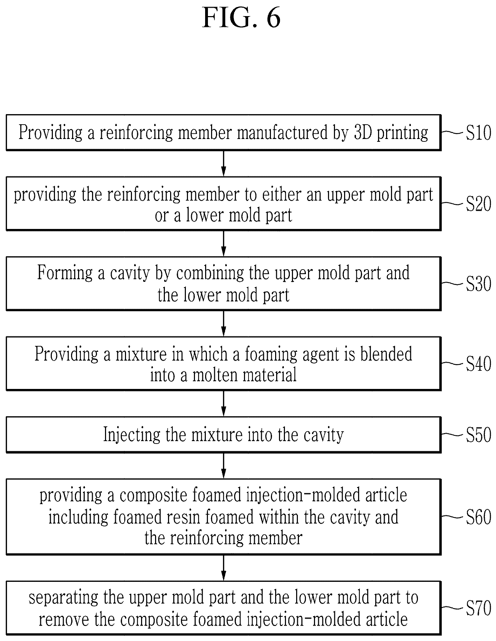

FIG. 6 schematically illustrates a flowchart of a method for manufacturing a composite foamed injection-molded article according to an embodiment of the present invention. The method for manufacturing the composite foamed injection-molded article shown in FIG. 6 is merely exemplary and is not intended to limit the scope of the present invention. Accordingly, the method for manufacturing the composite foamed injection-molded article may be modified into various other forms.

As shown in FIG. 6, the manufacturing method includes a step S10 of providing a reinforcing member manufactured by 3D printing; a step S20 of providing the reinforcing member to either an upper mold part or a lower mold part; a step S30 of forming a cavity by combining the upper and lower mold parts; a step S40 of providing a mixture in which a foaming agent is blended with a molten material; a step S50 of injecting the mixture into the cavity; a step S60 of forming a composite foamed injection-molded article including a foamed resin foamed within the cavity and the reinforcing member; and a step S70 of separating the upper and lower mold parts to remove the composite foamed injection-molded article. In addition, the method may further include one or more additional steps.

First, in the step of S10, a reinforcing member manufactured by 3D printing is provided. That is, a reinforcing member with an elastic lattice structure is fabricated using a 3D printer. For example, an MJF 4200 printer by HP may be used. As materials for the reinforcing member, terephthalic acid (TPA) or polyamide-nylon 11 (PA11) may be employed. TPA is a polyamide-based elastic material that offers high rebound elasticity and excellent durability under repeated deformation, making it suitable for applications requiring elastic reinforcement and shock absorption. PA11, on the other hand, is a high-strength, high-elongation material that provides stable support and durability under repeated loading, making it well-suited for use as a structural reinforcement material in footwear. The reinforcing member is manufactured by 3D printing using such materials.

In the step of S20, the reinforcing member is provided on the lower mold part. That is, the reinforcing member is placed on the lower mold part in preparation for combination with the foamed resin. This process is further explained with reference to FIG. 5, which is shown rotated 90 degrees for convenience to illustrate the top view (i.e., the xy-plane) of the upper surface of the lower mold (50).

FIG. 5 schematically illustrates step S20 of FIG. 6. The enlarged view in FIG. 5 schematically shows a cross-sectional structure taken along line V-V, illustrating a reinforcing member 100 placed on the lower mold part 503. The process for providing a reinforcing member shown in FIG. 5 is merely illustrative of the present invention and is not intended to limit the scope thereof. Accordingly, FIG. 5 may be modified into other forms.

As illustrated in FIG. 5, the reinforcing member 100 is provided on the lower mold part 503. The reinforcing member 100 includes a plurality of support portions 17, 18 and 19. These support portions 17, 18 and 19 enhance the structural strength of the sides 10, 12 and 14 of the reinforcing member 100, as shown in FIG. 2. The plurality of support portions 17, 18 and 19 include a first support portion 17, a second support portion 18, and a third support portion 19.

The first support portion 17 and the third support portion 19 are spaced apart from each other. They connect and support the first side 10 and the second side 12. The second support portion 18 connects the first support portion 17 to the third side 14, thereby supporting the third side 14. These support portions 17, 18, 19 contribute to securing the overall strength of the reinforcing member 100.

Meanwhile, as shown in the enlarged view of FIG. 5, the second support portion 18 is securely fixed to the lower mold part 503. The cavity formed by the lower mold part 503 is exposed to harsh conditions with considerable pressure fluctuations caused by the mixture of molten resin into which a foaming agent is incorporated and gas. Therefore, to improve the yield of the composite foamed injection-molded article, it is necessary for the reinforcing member 100 to be securely fixed.

To this end, the second support portion 18 includes a first inclined support portion 181 and a second inclined support portion 183. The first and second inclined support portions 181 and 183 are connected to each other in a linear contact manner. The first inclined support portion 181 is directed upward to the left while the second inclined support portion 183 is directed upward to the right. That is, the second inclined support portion 183 faces away from the first inclined support portion 181. The lower mold part 503 includes a first linear protruding surface 503a and a second linear protruding surface 503b, which are formed with mutually inclined surfaces. The first inclined support portion 181 is positioned on and supported by the first linear protruding surface 503a, and the second inclined support portion 183 is positioned on and supported by the second linear protruding surface 503b. Accordingly, the second support portion 18 can be stably fixed to the lower mold part 503.

Returning to FIG. 6, in the step of S30, the upper mold part and the lower mold part are combined to form a cavity. The formation of the cavity completes the preparation for foaming injection. In addition, gas is introduced into the cavity to apply pressure. This process will be described in detail with reference to FIG. 6.

FIG. 6 illustrates a state in which gas is introduced into the cavity S50 to pressurize. **The** pressurizing state shown in FIG. 6 is merely illustrative and is not intended to limit the invention. Accordingly, modifications to FIG. 6 are possible. **In** FIG. 6, the horizontal length refers to the x-axis direction while the vertical length refers to the y-axis direction.

As illustrated in FIG. 6, the lower mold part 503 includes a gas intake/exhaust path 550 surrounding the cavity S50. As indicated by arrows, gas rotates around and flows into the cavity S50, thereby applying pressure to it. **In** this case, the pressure in the cavity S50 is maintained in the range of 10 to 50 bar to ensure proper foaming of the mixture.

The lower mold part 503 is provided with an external outlet 5505 that introduces or exhausts gas through the intake/exhaust path 550. Along the longitudinal (y-axis) direction of the cavity S50, both ends of the intake/exhaust path 550 include an upper portion 5501 and a lower portion 5503. Intake/exhaust ports 5501a are formed in the upper portion 5501 to communicate with the cavity S50, and intake/exhaust ports 5503a are also formed in the lower portion 5503 to communicate with the cavity S50. When the composite foamed injection-molded article in the cavity S50 is manufactured, the upper portion thereof is typically formed thinner than the lower portion thereof. Since the foaming of the mixture injected into the cavity S50 is affected by gas exhaust, the intake pressure at the lower portion is increased to achieve a thicker lower section. Accordingly, the number of intake/exhaust ports 5503a in the lower portion 5503 is set to five, while the number of intake/exhaust ports 5501a in the upper portion 5501 is set to four, so that the number of intake/exhaust ports 5503a in the lower portion exceeds intake/exhaust ports 5501a in the upper portion. As a result, the exhaust pressure through intake/exhaust ports 5503a becomes greater than that through intake/exhaust ports 5501a, enabling the formation of a shoe sole that is thicker at the lower portion than at the upper portion.

Gas intake and exhaust are controlled through valves VL1, VL2, VR1 and VR2, which are connected to the intake/exhaust path 5503 corresponding to the longitudinal direction of the cavity S50. This allows for even pressure distribution and consistent intake/exhaust control within the cavity S50.

As shown in FIG. 6, two valves on each left and right side are connected to the external outlet 5505. During exhaust, valves VL1 and VR1 are opened first, followed by opening valves VL2 and VR2, to control the internal pressure of the cavity S50. Specifically, valves VL2 and VR2 may be opened 0.5 to 1 second after valves VL1 and VR1 are opened. Accordingly, this stable injection process enables uniform foaming and improves the quality of the resulting composite foamed injection-molded article.

The opening degree of valves VL1 and VR1 may be smaller than that of valves VL2 and VR2. That is, a sudden pressure drop in the cavity S50 can cause uneven injection quality. Therefore, the opening degree of VL1 and VR1 is adjusted to be relatively small, while that of VL2 and VR2 is adjusted to be relatively large. Here, opening degree refers to the ratio of the partially opened valve area to the total valve opening area. The opening degree of valves VL1 and VR1 may be 20% to 40%, while that of valves VL2 and VR2 may be 50% to 70%. By adjusting the valve openings in this manner, a uniformly foamed composite injection-molded article can be successfully manufactured.

Returning to FIG. 5, in the step of S40, a mixture in which a foaming agent is blended into a molten material is provided. That is, a molten resin mixed with a foaming agent is supplied into the cavity. The foaming agent may be a physical foaming agent or a chemical foaming agent. As physical foaming agents, nitrogen or carbon dioxide may be used.

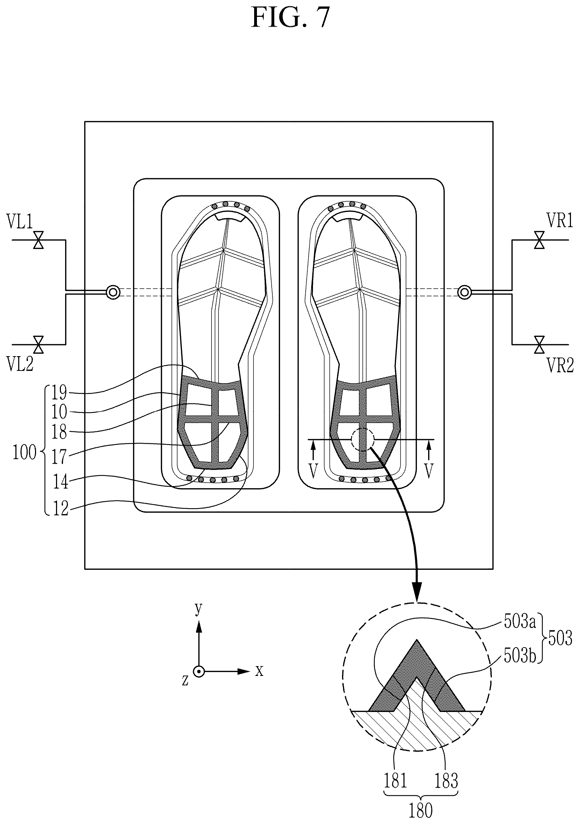

Next, in the step of S50, the mixture is injected into the cavity. This process is described in more detail with reference to FIG. 7.

FIG. 7 illustrates a state in which the mixture M is injected into the cavity S50 and foamed within the cavity S50. FIG. 7 is merely illustrative of the present invention and is not intended to limit the present invention. Accordingly, FIG. 7 may be modified into other variations.

The injection of the mixture M begins via the injection unit 505 shown in FIG. 3. The mixture M is injected from three positions aligned along the longitudinal direction of each cavity S50. The mixture may be injected into the cavity S50 under a pressure ranging from 3 MPa to 300 MPa. If the injection pressure is too low, the mixture may not be adequately introduced. On the other hand, due to process design limitations, the injection pressure cannot be excessively high.

Meanwhile, the depressurization of the cavity S50 and the injection of the mixture may occur simultaneously. In addition, the injection of the mixture in a step of S90 may occur first, followed by the depressurization of the cavity S50 in a step of S80. For example, the cavity S50 may be initially pressurized to 10 bar to 50 bar and then depressurized. More preferably, the cavity S50 may be pressurized to 10 bar to 20 bar. **If** the pressure is too high or too low, it may be difficult to achieve an optimal back pressure suitable for foaming the mixture. Therefore, the pressure of the cavity S50 is maintained within the aforementioned range.

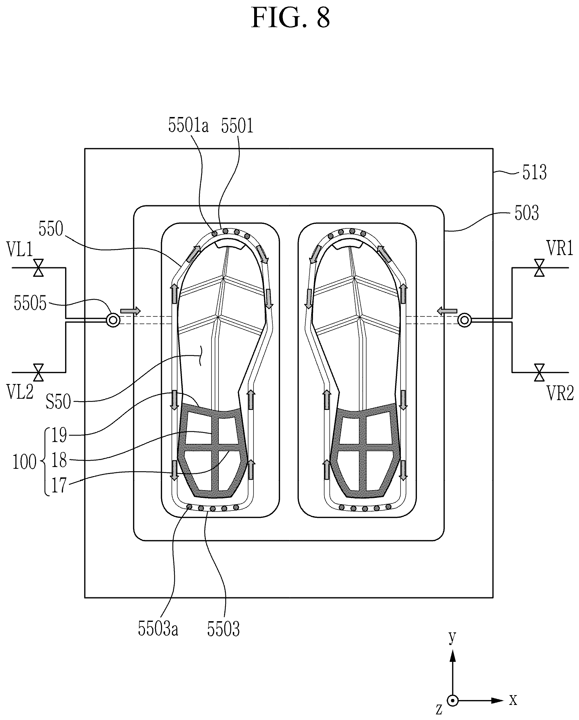

FIG. 8 is a graph illustrating changes in the pressure of the cavity and the injection pressure over time. **The** bold line in FIG. 8 represents the change in pressure of the cavity over time while the thin line represents the change in injection pressure over time.

As shown in FIG. 8, the depressurization rate of the cavity is controlled to be proportional to the rate of decrease in injection pressure. Both the depressurization rate of the cavity and the rate of decrease in injection pressure exhibit a stepped profile. In this case, the two rates are substantially proportional to each other. For example, the depressurization rate of the cavity and the decrease rate of the injection pressure are identical, thereby a composite foamed injection-molded article with uniform quality can be produced.

Returning to FIG. 5, in the step of S60, a composite foamed injection-molded article including a foamed resin, which has been foamed within the cavity, and a reinforcing member is provided. As the mixture foams, it becomes physically bonded to the reinforcing member. As a result, a composite foamed injection-molded article can be manufactured.

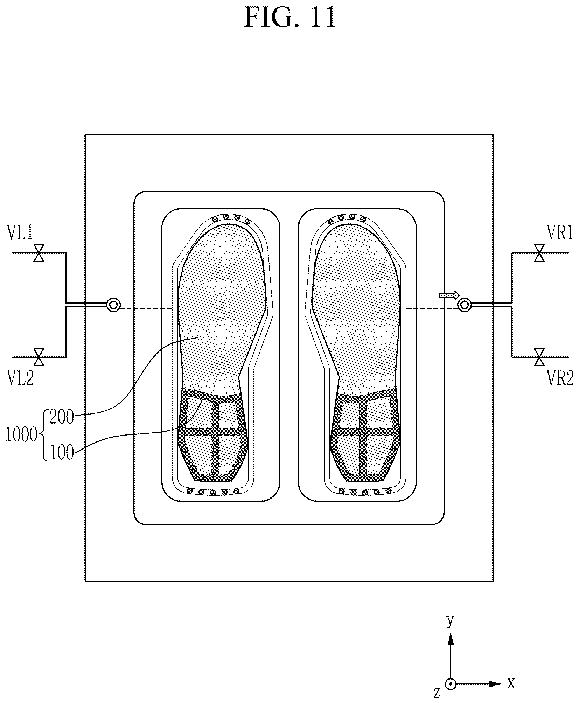

Finally, in the step of S70, the upper mold part and the lower mold part are separated from each other, and the composite foamed injection-molded article is removed. This process is described in more detail with reference to FIG. 11.

FIG. 11 schematically illustrates a process of removing the composite foamed injection-molded article. FIG. 11 is merely illustrative of the present invention and is not intended to limit the present invention. Accordingly, FIG. 11 may be modified into other forms.

As shown in FIG. 11, the upper mold part and the lower mold part are separated from each other, and the composite foamed injection-molded article 1000 is removed. In the composite foamed injection-molded article 1000, the reinforcing member 100 and the foamed resin 200 are physically and integrally bonded.

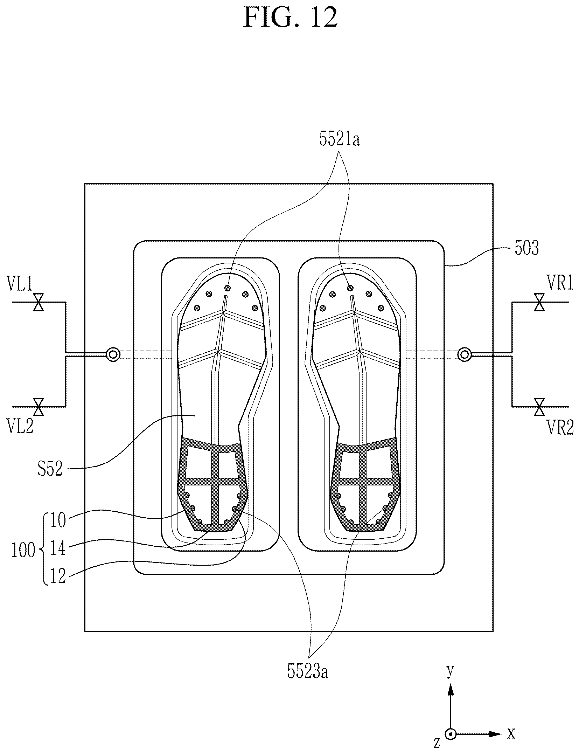

FIG. 12 schematically illustrates a partial plan view of another mold 52 used for manufacturing the composite foamed injection-molded article of FIG. 1. Since the structure of the mold 52 in FIG. 12 is similar to that of the mold 50 in FIG. 5, like reference numerals refer to like elements and detailed descriptions thereof are omitted.

As shown in FIG. 12, intake/exhaust ports 5521a and 5523a are respectively formed in the upper and lower parts of the cavity S52 along the longitudinal direction of the mold 52, respectively. Since the lower portion of the composite foamed injection-molded article formed in the cavity S52 is thicker than the upper portion thereof, the diameter of the intake/exhaust ports 5523a is made larger than that of the intake/exhaust ports 5521a to increase the amount of gas intake. The intake/exhaust ports 5523a and the sides 10, 12 and 14 of the reinforcing member 100 overlap with each other. As a result, foaming of the mixture inside the reinforcing member 100 can be effectively performed. Consequently, the mechanical bonding strength between the reinforcing member 100 and the mixture can be improved.

Although the present invention has been described above with reference to specific embodiments, it will be understood by those skilled in the art that various modifications and changes may be made without departing from the spirit and scope of the invention as defined by the following claims.

## Claims

1. A method for manufacturing a composite foamed injection-molded article, comprising:
providing a reinforcing member manufactured by 3D printing;
providing the reinforcing member to at least one mold part selected from a group consisting of an upper mold part and a lower mold part;
forming a cavity by combining the upper mold part and the lower mold part;
providing a mixture in which a foaming agent is blended into a molten material;
injecting the mixture into the cavity;
forming a composite foamed injection-molded article including the reinforcing member and a foamed resin foamed in the cavity; and
separating the upper mold part and the lower mold part to remove the composite foamed injection-molded article.

2. The method of claim 1, wherein in the providing the reinforcing member, a plurality of through-holes are formed on at least one sides of the reinforcing member, and
wherein in the providing the composite foamed injection-molded article, the foamed resin is filled in one or more of the through-holes to physically bind with the reinforcing member.

3. The method of claim 2, wherein the one or more sides of the reinforcing member comprise a plurality of sides, the plurality of sides comprise:
a first side, and
a second side spaced apart from and opposing to the first side.

4. The method of claim 3, wherein the plurality of sides further comprise a third side connecting the first and second sides, and the third side comprises one or more step portions or notch portions.

5. The method of claim 4, wherein the first and second sides are in contact with a bottom of the lower mold part, and the third side is spaced apart from the bottom of the lower mold part.

6. The method of claim 4, wherein in the providing the reinforcing member, the reinforcing member further comprises:
a first support portion connecting the first and second sides, and
a second support portion connecting the first support portion and the third side, and
wherein the second support portion is fixed on a convex linear part formed in the mold part.

7. The method of claim 6, wherein the second support portion comprises:
a first inclined support portion directed in a first direction, and
a second inclined support portion connected to and in line contact with the first inclined support portion and directed in a second direction opposite to the first direction.

8. The method of claim 6, wherein the first support portion comprises:
a curved portion connected to the second support portion, and
a straight portion connecting the curved portion and at least one of the first and second sides, and
wherein the curved portion is convexly formed toward the opening direction of the mold part during foaming of the foamed resin.

9. The method of claim 2, wherein in the providing the reinforcing member, the reinforcing member further comprises a protruding portion protruding toward the opening direction of the mold part, and
wherein the protruding portion is formed on the side and bonded to the foamed resin.

10. The method of claim 2, wherein, in the providing the reinforcing member, the at least one sides are adjacent to the plurality of through-holes and further comprise a reinforcing portion that comes into contact with an inner surface of the first mold to form a closed space.

11. The method of claim 1 further comprising:
introducing gas into the cavity to pressurize the cavity; and
exhausting the gas from the cavity,
wherein the exhausting of the gas is performed before the injecting the mixture into the cavity.

12. The method of claim 11, wherein the injecting the mixture into the cavity is performed simultaneously with the exhausting of the gas.

13. The method of claim 11, wherein decrease amount in the injection pressure of the mixture over time during the injecting the mixture is substantially the same as amount of the gas exhausted over time during the exhausting the gas.

14. The method of claim 11, wherein in the injecting the mixture, an intake/exhaust path surrounding the cavity is formed on the lower mold part and
wherein a length of the cavity in the longitudinal direction is greater than a length in the transverse direction perpendicular to the longitudinal direction, and
wherein a plurality of intake/exhaust ports are formed at both ends of the cavity in the longitudinal direction, and
wherein the plurality of intake/exhaust ports are in communication with the cavity.

15. The method of claim 14, wherein the plurality of intake/exhaust ports comprise:
a plurality of first intake/exhaust ports spaced apart from each other and located at a first end of the cavity; and
a plurality of second intake/exhaust ports spaced apart from each other and located at a second end opposite the first end,
wherein, in the injecting the mixture, the average thickness of the composite foamed injection-molded article formed in a portion of the cavity closer to the second end is greater than the average thickness of another portion of the cavity relatively closer to the first end, and the exhaust pressure applied to the second intake/exhaust ports is greater than the exhaust pressure applied to the first intake/exhaust ports.

16. The method of claim 14, wherein the plurality of intake/exhaust ports comprise:
a plurality of first intake/exhaust ports spaced apart from each other and located at a first end of the cavity; and
a plurality of second intake/exhaust ports spaced apart from each other and located at a second end opposite the first end, and
wherein, in the injecting the mixture, the average thickness of the composite foamed injection-molded article formed in a portion of the cavity closer to the second end is greater than the average thickness of another portion of the cavity relatively closer to the first end,
and wherein an amount of gas exhausted through the second intake/exhaust ports is greater than an amount of gas exhausted through the first intake/exhaust ports.

17. The method of claim 11, wherein, in the exhausting the gas, the gas is exhausted through a first valve and a second valve connected to the intake/exhaust path corresponding to the longitudinal length of the cavity, and the second valve is opened after the first valve is opened.

18. The method of claim 17, wherein the second valve is opened 0.5 to 1 second after the first valve is opened.

19. The method of claim 18 wherein an opening degree of the first valve is smaller than an opening degree of the second valve, and the opening degree of the first valve is in a range of 20% to 40%.

20. The method of claim 19, wherein the opening degree of the second valve is in a range of 50% to 70%.

21. The method of claim 11, wherein in the injecting the mixture, the intake/exhaust ports surrounding the cavity are formed on the lower mold part, and
wherein a plurality of the intake/exhaust ports are formed on both sides along the longitudinal direction of the cavity, and the intake/exhaust ports are in communication with the intake/exhaust path.

22. The method of claim 21, wherein the plurality of the intake/exhaust ports comprise:
a plurality of first intake/exhaust ports spaced apart from each other at a first side among both sides; and
a plurality of second intake/exhaust ports spaced apart from each other at a second side opposite the first side, and
wherein the average thickness of the foamed article formed in a region closer to the second side is greater than the thickness formed closer to the first side, and the diameter of one or more of the second discharge holes is greater than that of one or more of the first discharge holes.

23. The method of claim 22, wherein in the providing the reinforcing member, the reinforcing member comprises a plurality of sides, and one or more of the second discharge holes are located overlapping one or more of the sides.

24. A composite foamed injection-molded article comprising:
a reinforcing member manufactured by 3D printing and having a plurality of sides; and
a foamed resin physically bonded to the reinforcing member, and
wherein the foamed resin fills a plurality of through-holes formed on one or more of the plurality of sides.

25. The composite foamed injection-molded article of claim 24, wherein the plurality of sides comprise:
a first side, and
a second side spaced apart from and opposing to the first side, and
wherein the foamed resin is filled between the first and second sides.

26. The composite foamed injection-molded article of claim 25, wherein the plurality of sides further comprise a third side connecting the first and second sides, and the third side includes one or more step portions or notch portions.

27. The composite foamed injection-molded article of claim 26, wherein the reinforcing member further comprises:
a first support portion connecting the first and second sides; and
a second support portion connecting the first support portion and the third side, and
wherein the second support portion comprise:
a first inclined support portion directed in a first direction, and
a second inclined support portion connected in line contact with the first inclined support portion and directed in a second direction away from the first direction.

28. The composite foamed injection-molded article of claim 27, wherein the first support portion comprises:
a curved portion connected to the second support portion; and
a straight portion connecting the curved portion and one or more of the first and second sides, and
wherein the curved portion is formed convexly toward the opening direction of a mold part during the foaming of the foamed resin.

29. The composite foamed injection-molded article of claim 24, wherein the reinforcing member further comprise a protrusion projecting toward the opening direction of a mold applied to contact the one or more sides, and
wherein protrusion is formed on the side and bonded to the foamed resin.

30. The composite foamed injection-molded article of claim 24, wherein the one or more sides are adjacent to the plurality of through-holes, and further include a reinforcing part configured to form a closed space with the mold that is applied to contact the side during foamed injection.

31. The composite foamed injection-molded article of claim 26, wherein the strength of the reinforcing member is greater than the strength of the foamed resin.

32. The composite foamed injection-molded article of claim 31, wherein the foamed resin is made of one or more materials selected from the group consisting of polyether block amide (PEBA), thermoplastic polyester elastomer (TPEE), and thermoplastic polyurethane (TPU).

33. The composite foamed injection-molded article of claim 32, wherein the reinforcing member is made of one or more materials selected from the group consisting of terephthalic acid (TPA) and polyamide-nylon 11 (PA11).

34. The composite foamed injection-molded article of claim 26 wherein the composite foamed injection-molded article is a shoe sole.
